# EUROPEAN PATENT APPLICATION

(11) **EP 4 145 236 A1**
(43) Date of publication of application: **08.03.2023**
(21) Application number: 21796896.5
(22) Date of filing: 08.04.2021
(51) Int. Cl.: G05B 23/02, G08C 25/00, H04Q 9/02, G08C 17/00, H04M 1/00

(54) **SENSOR AUTHENTICATION/REGISTRATION SYSTEM, DATA COLLECTION SYSTEM, AND DATA COLLECTION METHOD**

(30) Priority: 27.04.2020 JP 2020078586; 27.04.2020 JP 2020078594
(71) Applicant: Ebara Corporation, Tokyo 144-8510 (JP)
(72) Inventor: SAKAMAKI, Yuta, Tokyo 144-8510 (JP); LIANG, QIAN, Tokyo 144-8510 (JP); YAMADA, Yasumasa, Tokyo 144-8510 (JP); SEKIGUCHI, Takashi, Tokyo 144-8510 (JP); SUGIYAMA, Kazuhiko, Tokyo 144-8510 (JP)
(74) Representative: Wimmer, Hubert
(86) International application number: PCT/JP2021/014955
(87) International publication number: WO 2021/220764

(57) **Abstract**

A sensor authentication registration system includes: sensors for detecting a state quantity of a sensing target device; and setting device that stores installation information for each of the sensors. A radio wave intensity measurement unit that measures intensity of a radio wave in wireless communication is provided to at least one of the sensors or the setting device. The setting device can perform an authentication operation to store the installation information when the presence of a sensor, the installation information of which is not stored, is detected and the radio wave intensity is equal to or higher than a threshold value. A data collection system includes: sensors; and data collection device that stores installation information for each of the sensors and receives state quantities detected by the sensors via wireless communication. In the device and a method for data collection, the state quantity is automatically received when the data collection device approaches to within a range where the wireless communication with the sensor, whose installation information is stored, can be received.

## Description

### TECHNICAL FIELD

The present disclosure relates to a sensor authentication registration system, a data collection system, and a data collection method and, in particular, to a sensor authentication registration system capable of easily performing authentication registration while avoiding unauthorized registration from the outside as well as a data collection system and a data collection method capable of easily collecting data.

### BACKGROUND ART

For example, in pump equipment for transporting a fluid, a sensor that is provided to a pump generally detects a state quantity such as vibration, a temperature, a flow rate, or the like. As a system including such pump equipment, such a system is available that sends information on the state quantity, which is detected by the sensor provided to the pump, to a terminal device such as a smartphone, a tablet terminal, or a personal computer via a controller, and shows the information in a display of this terminal device (for example, see Japanese Patent Application Publication No. 2019-113369 and Japanese Patent Application Publication No. 2017-180349).

### SUMMARY OF THE INVENTION

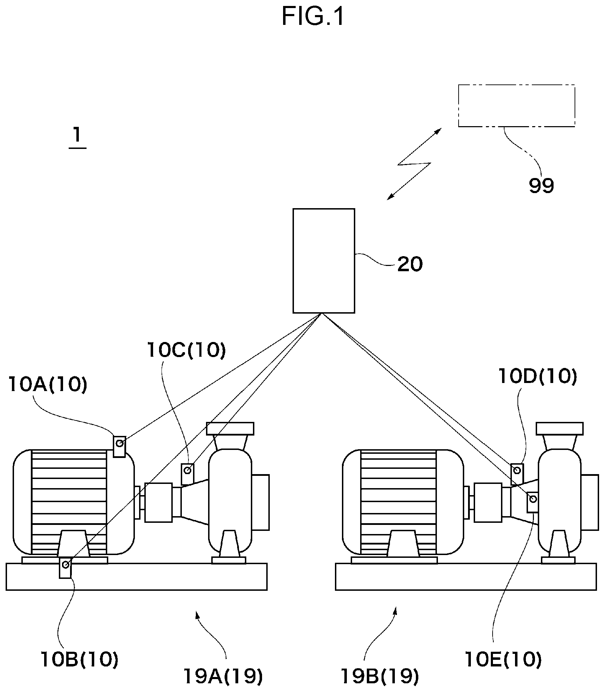

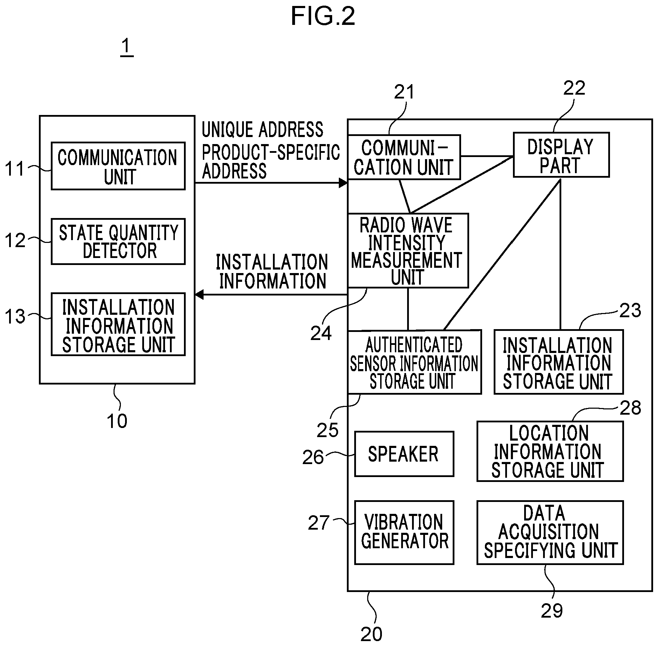

A sensor authentication registration system according to a first aspect of the present disclosure includes, as shown in FIGs. 1 and 2, for example, a plurality of sensors 10 installed in the one or more sensing target devices 19 disposed in a management target area, each of the plurality of sensors 10 being configured to detect a state quantity of the one or more sensing target devices 19; and a setting device 20 configured to store installation information for each of the plurality of sensors 10, wherein: each of the sensors 10 and the setting device 20 are configured to be wirelessly communicable with each other, a radio wave intensity measurement unit 24 is provided to at least one of the plurality of sensors 10 or the setting device 20, the radio wave intensity measurement unit 24 being configured to measure an intensity of a radio wave in wireless communication, and the setting device 20 is configured to perform an authentication operation to store the installation information in a case in which, when the presence of a sensor 10 whose installation information is not stored is detected, the intensity of the radio wave measured by the radio wave intensity measurement unit 24 is equal to or higher than a threshold value.

Conventionally, in order to enable communication between the sensor and a terminal device, authentication registration is usually performed to associate the sensor and the terminal device. In order to facilitate this authentication registration, it would be considered to use the radio wave that is emitted by the sensor. However, when the intensity of the radio wave is increased in order to authenticate and register the plural sensors at the same time, there is a possibility that those sensors are registered illegally from the outside. On the other hand, when a setting task is performed for each of the sensors without using the radio wave in order to avoid the unauthorized registration, the setting task becomes bothersome as the number of the sensors to be authenticated and registered is increased. However, with the configuration as that of the sensor authentication registration system according to the first aspect of the present disclosure, the operation to authenticate the sensors can be performed when the intensity of the radio wave is equal to or higher than the threshold value. Thus, it is requested to bring the setting device close to the sensor for authentication, and it is possible to easily perform the authentication registration while avoiding the unauthorized registration from a location away from the sensor on the outside.

As for a sensor authentication registration system according to a second aspect of the present disclosure, as shown in FIG. 2, for example, in the sensor authentication registration system 1 according to the first aspect, the setting device 20 may include a display part 22 configured to show information on the sensor 10.

With such a configuration, it is possible to visually check the information on the sensor.

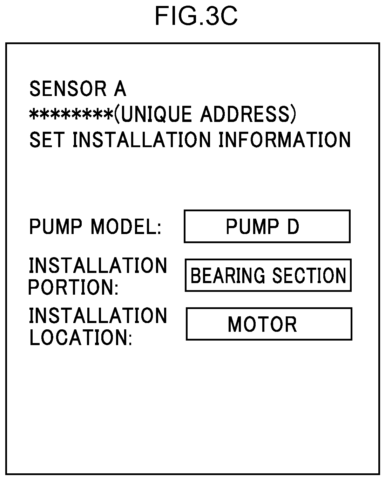

As for a sensor authentication registration system according to a third aspect of the present disclosure, as shown in FIGs. 2 and 3C, for example, in the sensor authentication registration system 1 according to the second aspect, during the authentication operation, the setting device 20 may be configured to show, in the display part 22, an item of the installation information of the sensor 10 of which the installation information is to be stored.

With such a configuration, it is possible to perform the authentication operation while checking the information on the sensor whose installation information is to be stored.

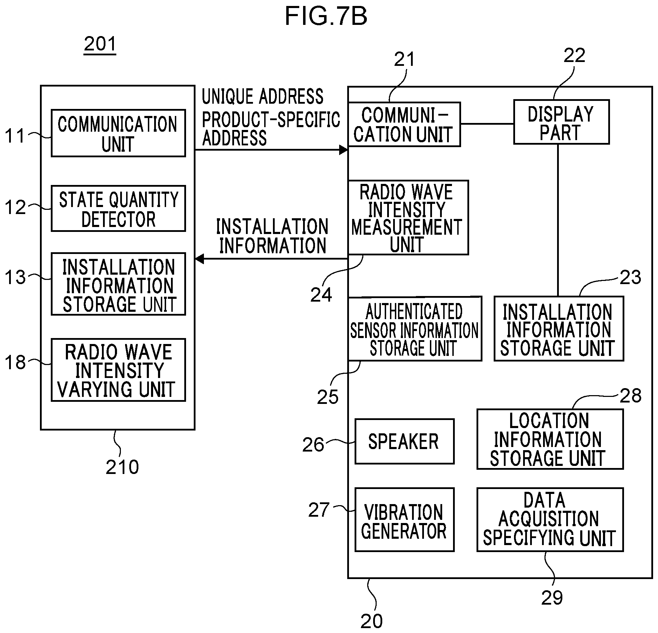

As for a sensor authentication registration system according to a fourth aspect of the present disclosure, as shown in FIG. 7B, for example, in the sensor authentication registration system 201 according to any one of the first to third aspects, the sensor 210 may be configured to receive and store the installation information, which is stored in the setting device 20, from the setting device 20 via the wireless communication, and may be configured to increase the intensity of the radio wave emitted from the sensor 210 after storing of the installation information is completed.

With such a configuration, until the authentication operation is performed, the radio wave with the relatively low intensity is emitted, and only the setting device existing in the short distance can thereby be authenticated. After the authentication operation is performed, the radio wave with the high intensity is emitted, and the setting device can thereby receive the state quantity, which is detected by the sensor, in the relatively long distance.

As for a data collection system according to a fifth aspect of the present disclosure includes, as shown in FIG. 1, for example, a plurality of sensors 10 installed in one or more sensing target devices 19 disposed in a management target area, each of the plurality of sensors 10 being configured to detect a state quantity of the one or more sensing target devices 19; and a data collection device 20 that stores installation information for each of the plurality of sensors 10, the data collection device 20 being configured to receive the state quantity detected by the sensor 10 of which the installation information is stored, via wireless communication, wherein the data collection device 20 is configured to automatically receive the state quantity detected by the sensor 10 when the data collection device 20 approaches to within a range within which the wireless communication can be received for each of the sensors 10 for which the installation information is stored.

Conventionally, in the case where a large number of the sensors is provided in the system, in order to send the state quantities detected by the sensor to a controller before sending the state quantities to the terminal device, relatively large instrumentation work, such as building of a central monitoring facility, is often required, which makes system construction complicated. However, with the configuration as that of the data collection system according to the fifth aspect of the present disclosure, the data collection device automatically receives the state quantity, which is detected by the sensor, when it approaches to within the range where the data collection device can receive the state quantity. Thus, the data collection device can collect the data simply by cruising around the range where the data collection device can receive the state quantity from each of the sensors. As a result, the data on the state quantities detected by the sensors can easily be collected.

As for a data collection system according to a sixth aspect of the present disclosure, as shown in FIG. 2, for example, in the data collection system 1 according to the fifth aspect, the data collection device 20 may include a location information storage unit 28 configured to store information regarding a receivable location, being a location at which a radio wave from the sensor 10 in the wireless communication can be received, with an intensity that is equal to or higher than a threshold value, and the data collection device 20 may be configured to automatically receive the state quantity detected by the sensor 10 when the data collection device 20 is in the receivable location.

With such a configuration, even in the case where it is difficult to detect the wireless communication between the sensor and the data collection device due to failure of the sensor or the like, it is possible to recognize the existence of the sensor, from which the state quantity should be collected.

As for a data collection system according to a seventh aspect of the present disclosure, as shown in FIG. 2, for example, in the data collection system 1 according to the sixth aspect, the data collection device 20 may include a notification unit 22, 26, and 27 configured to notify an operator of the data collection device 20 that the wireless communication with the sensor 10 is not established when the wireless communication with the sensor 10 is not established even when the data collection device 20 is in the receivable location.

With such a configuration, it is possible to avoid such a situation that collection of the state quantity of the sensor to be collected is forgotten.

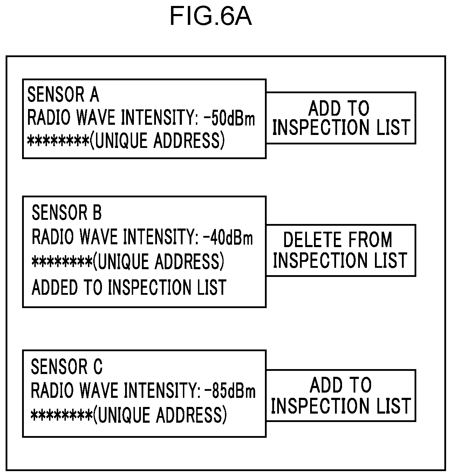

As for a data collection system according to an eighth aspect of the present disclosure, as shown in FIGs. 2 and 6A, for example, in the data collection system 1 according to any one of the fifth to seventh aspects, the data collection device may include a data acquisition specifying unit 29 configured to select the sensor 10, from which data is to be collected, from the plurality of sensors 10, the installation information of each of which is stored.

With such a configuration, the sensor, from which the data is to be collected, can be selected from the plural sensors. Therefore, it is possible to efficiently collect the data while reducing a communication volume.

As for a data collection method according to a nineth aspect of the present disclosure includes, as shown in FIGs. 1, 4, and 5, for example, an authentication step (S7) of individually associating a plurality of sensors 10 with a data collection device 20, wherein the sensors 10 are installed in one or more sensing target devices 19 disposed in a management target area and are configured to detect a state quantity of the sensing target devices 19, and wherein the data collection device 20 is configured to collect data on the state quantity detected by the sensor 10; and a reception step (S15 to S17) of automatically receiving, by the data collection device 20, the state quantity detected by the sensor 10 when the data collection device 20 approaches to within a range within which the data collection device 20 can receive the state quantity detected by the sensor 10, which is associated with the data collection device 20, via wireless communication.

With such a configuration, the data collection device automatically receives the state quantity, which is detected by the sensor, when it approaches to within the range where the data collection device can receive the state quantity. Thus, the data collection device can collect the data simply by cruising the range where the data collection device can receive the state quantity from each of the sensors.

### BRIEF DESCRIPTION OF DRAWINGS

FIG. 1 is a schematic configuration view of a detection system according to an embodiment.
FIG. 2 is a schematic configuration diagram of a sensor and a mobile device constituting the detection system according to the embodiment.
FIG. 3A to FIG. 3D are views, each of which illustrates an example of information shown in a display part.
FIG. 4 is a flowchart for explaining a procedure for performing authentication registration of the sensor that is newly installed in the detection system according to the embodiment.
FIG. 5 is a flowchart for explaining a procedure for collecting a state quantity that is detected by the authenticated and registered sensor.
FIG. 6A to FIG. 6D are views, each of which illustrates an example of an inspection state shown in the display part.
FIG. 7A is a schematic configuration diagram of a sensor and a mobile device constituting a detection system according to a modified example of the embodiment, and FIG. 7B is a schematic configuration diagram of a sensor and a mobile device constituting a detection system according to another modified example of the embodiment.

### DESCRIPTION OF EMBODIMENTS

This application is based on the Patent Applications No. 2020-78586 filed on April 27, 2020 in Japan and No. 2020-78594 filed on April 27, 2020 in Japan, the contents of which are hereby incorporated in its entirety by reference into the present application, as part thereof.

The present invention will become more fully understood from the detailed description given hereinbelow. Further range of application of the present invention will become clearer from the detailed description given hereinbelow. However, the detailed description and the specific embodiment are illustrated of desired embodiments of the present invention and are described only for the purpose of explanation. Various changes and modifications will be apparent to those ordinary skilled in the art on the basis of the detailed description.

The applicant has no intention to give to public any disclosed embodiment. Among the disclosed changes and modifications, those which may not literally fall within the scope of the patent claims constitute, therefore, a part of the present invention in the sense of doctrine of equivalents.

Description will hereinafter be made of embodiments with reference to the drawings. The same or corresponding members are denoted with the same reference numerals in all the drawings, and their descriptions are not repeated.

First, with reference to FIG. 1, a description will be made on a detection system 1 according to an embodiment. FIG. 1 is a schematic configuration view of the detection system 1. The detection system 1 includes a plurality of sensors 10 and a mobile device 20.

Each of the sensors 10 is attached to at least a sensing target device 19 (hereinafter simply referred to as "target device 19"). A typical example of the target device 19 is a pump device. However, the target device 19 may be rotating equipment, such as a fan or a blower or may be an apparatus such as heat source apparatus, other than the pump device. The target device 19 is installed in a management target area. The management target area is a location, such as a machine room in a factory or an office building, where the target device 19 is set, and the sensors 10 that should acquire information (state quantity) are installed in the target device 19. FIG. 1 illustrates an example in which target device 19A has a sensor 10A attached to a motor, a sensor 10B attached to a mount, and a sensor 10C attached to a bearing and target device 19B has a sensor 10D attached to a bearing and a sensor 10E attached to a pump housing. The sensors 10A, 10B, 10C, 10D, 10E are independent of each other and each detect the state quantity related to an attached portion. However, the sensors 10A, 10B, 10C, 10D, 10E will collectively be referred to as the "sensor 10" when a common property thereof is described. Similarly, the target devices 19A, 19B each exert an independent function of each other. However, the target devices 19A, 19B will collectively be referred to as the "target device 19" when a common property thereof is described.

In the example illustrated in FIG. 1, the target device 19A has the three sensors 10A, 10B, 10C, and the target device 19B has the two sensors 10D, 10E. However, the number of the sensors 10 attached to the target device 19A and/or the target device 19B may be increased or reduced when necessary, and the number of the target device 19 may also be increased or reduced when necessary. In a typical mode of the detection system 1 including the sensors 10, a plurality of units of the target devices 19, in each of which the plural sensors 10 are installed, are provided. However, the plural units of the target devices 19, in each of which the single sensor 10 is installed, may be provided. Alternatively, the single unit of the target device 19, in which the plural sensors 10 are installed, may be provided. Further alternatively, the single unit of the target device 19, in which the plural sensors 10 are installed, and the single unit of the target device 19, in which the single sensor 10 is installed, may be provided in plural pairs.

Referring to FIG. 2 together, a description will herein be made on configurations of the sensor 10 and the mobile device 20. FIG. 2 is a schematic configuration diagram of the single sensor 10 and the mobile device 20 constituting the detection system 1. The sensor 10 is typically configured to be actuated when being supplied with some of electric power (usually electric power from a commercial power supply) that is supplied to the target device 19. A battery may be provided as an auxiliary power supply in case of power outage of the commercial power supply, or the sensor 10 may be configured to be actuated only with the battery without using the commercial power supply. The sensor 10 has a communication unit 11, a state quantity detector 12, and an installation information storage unit 13. The communication unit 11 is a portion that has a necessary component, such as an antenna, for wireless communication with the mobile device 20. The communication unit 11 is configured to enable data exchange with the state quantity detector 12 and the installation information storage unit 13, and is configured to be able to receive data to be sent to the mobile device 20 from the state quantity detector 12 and the installation information storage unit 13 and be able to pass data received from the mobile device 20 to the installation information storage unit 13.

The state quantity detector 12 is a portion that detects the state quantity of the portion, to which the sensor 10 is attached, in the target device 19. Examples of the state quantity that is detected by the state quantity detector 12 of the sensor 10 can be vibration, a temperature, a pressure, and a current. Typically, it is configured that the single sensor 10 detects one type of the state quantity. However, it may be configured that the single sensor 10 detects plural types of the state quantity. In this embodiment, it is configured that the sensor 10A detects the current, the sensors 10B, 10C, 10D each detect the vibration, and the sensor 10E detects the pressure.

The installation information storage unit 13 is a portion that stores necessary information to identify the respective sensors 10 and that can also store information contributing to use of the state quantity detected by the sensor 10. More specifically, the installation information storage unit 13 stores a unique address that identifies the respective sensors 10. The unique address is an address that is assigned to each of the sensors 10, and is the only address with which the respective sensors 10 can be distinguished from the other sensors 10. In this embodiment, the installation information storage unit 13 also stores a product-specific address. The product-specific address is an address that identifies a type of the sensor 10. The same product-specific address is assigned to the same type of the sensors 10 (typically the same products). In other words, the same product-specific address is possibly assigned to the plural sensors 10. In addition, the installation information storage unit 13 is configured to be able to later store information on installation of the sensor 10 (hereinafter referred to as "installation information"). The installation information of the sensor 10 include an installation location (where in the management target area the sensor 10 is installed), an installation portion (where in the target device 19 the sensor 10 is installed), an installation model (a type of the target device 19), and the like.

The mobile device 20 is a device capable of performing authentication registration of each of the sensors 10, and is also a device that collects the state quantity detected by the authenticated and registered sensor 10. In other words, in this embodiment, the mobile device 20 serves as both of setting device and data collection device. Typically, a tablet-type mobile terminal can be used as the mobile device 20. However, a smartphone or a laptop (a notebook computer) may be used as the mobile device 20. As illustrated in FIG. 1, the mobile device 20 may have a communication function with external equipment 99 such as an external server (including a cloud server). In this embodiment, the mobile device 20 has a communication unit 21, a display part 22, an installation information storage unit 23, a radio wave intensity measurement unit 24, an authenticated sensor information storage unit 25, a speaker 26, a vibration generator 27, a location information storage unit 28, and a data acquisition specifying unit 29 (or a data acquisition specifier). These units are configured to enable mutual data exchange either directly or indirectly.

The communication unit 21 is a portion that has a necessary component, such as an antenna, for wireless communication with the sensor 10 and has a necessary component for wireless or wired communication with the external equipment 99. The communication unit 21 is configured to be able to pass data received from the sensor 10 and/or the external equipment 99 to a necessary portion (for example, the display part 22, the radio wave intensity measurement unit 24, or the like) in the mobile device 20 and to receive data to be sent to the sensor 10 and/or the external equipment 99 from the necessary portion in the mobile device 20.

The display part 22 is a portion that shows the information on the sensor 10, and is typically configured to include a display. Examples of the information on the sensor 10 are the unique address of the sensor 10, intensity of a radio wave emitted by the sensor 10, presence/absence of authentication of the sensor 10, and whether the sensor 10 is currently under an authentication operation. In addition, the display part 22 may be configured to be able to show items of the installation information of the sensor 10 that is to be registered. From a perspective of simplifying the authentication operation, it is preferred that the items of the installation information shown in the display part 22 can be selected from pre-registered candidates in a pull-down menu or the like. However, a person who makes settings may directly enter such items.

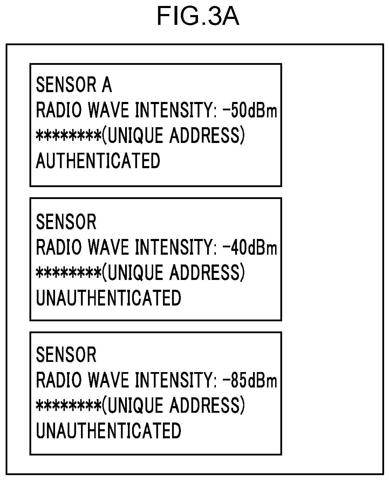

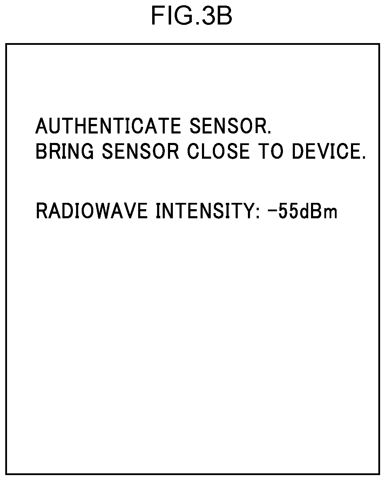

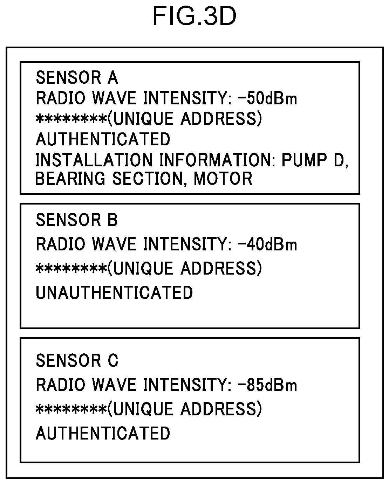

FIGs. 3A to 3D each illustrate an example of the information shown in the display part 22. FIG. 3A illustrates an example of a list display screen that shows, for each of the plural sensors 10, the radio wave intensity, the unique address, and the presence/absence of the authentication. FIG. 3B illustrates an example of an authentication screen showing that the sensor 10 is currently under the authentication operation. FIG. 3C illustrates an example of an installation information setting screen in which the items of the installation information of the sensor 10 that is to be registered are selected and shown from the pre-registered candidates in the pull-down menus. FIG. 3D illustrates an example of a list display screen in which the installation information is added to one (a sensor A) of the sensors 10.

The installation information storage unit 23 is a portion that stores the installation information of each of the authenticated and registered sensors 10. Storable capacity (storage) of the installation information storage unit 23 may be determined in consideration of the number of the sensors 10 that are planned to be authenticated. The radio wave intensity measurement unit 24 is a portion that measures the intensity of the radio wave emitted by the sensor 10. The radio wave intensity measurement unit 24 may be configured to detect the radio wave intensity in a specific numerical value, or may be configured to detect to which of ranges sectioned in advance (for example, per 10 dBm) the radio wave intensity belongs. The authenticated sensor information storage unit 25 is configured to store the unique address of the sensor 10, the authentication of which is completed. In addition, the authenticated sensor information storage unit 25 may be configured to store the product-specific address of the sensor 10, the authentication of which is completed. The authenticated sensor information storage unit 25 is configured to cooperate with the installation information storage unit 23 to associate the unique address, which is stored in the authenticated sensor information storage unit 25, with the installation information, which is stored in the installation information storage unit 23.

The speaker 26 outputs, as sound, information to be transmitted to an operator of the mobile device 20, or the like. The speaker 26 is configured to be able to emit voice, a melody, or buzzer sound. The vibration generator 27 is used to output, as the vibration, the information to be transmitted to the operator of the mobile device 20, or the like, and typically includes a vibrator.

The location information storage unit 28 is a portion that stores a location where the radio wave emitted from the authenticated and registered sensor 10 can be received with intensity that is equal to or higher than a threshold value. The location information storage unit 28 typically includes a GPS receiver, and is configured to be able to specify and store a desired location by using the GPS. The data acquisition specifying unit 29 is a portion that selects the sensor 10, from which the state quantity is to be collected, when collecting the state quantity that is detected by the authenticated and registered sensor 10. There is a case where necessary timing or a necessary cycle to collect the state quantity differs by the installation location of the sensor 10 (the type of the state quantity detected by the sensor 10). For this reason, the data acquisition specifying unit 29 can select the sensor 10, from which the state quantity is to be collected. By selecting the sensor 10, from which the state quantity is to be collected, it is possible to reduce a communication volume and thus efficiently collect the state quantity.

Each of the sensors 10 and the mobile device 20 are configured to enable the mutual wireless communication. As wireless communication means, communication means such as (Bluetooth (registered trademark), Bluetooth Low Energy, Wi-Fi, ZigBee (registered trademark), Sub-GHz, EnOcean (registered trademark), or the like) conforming to international standards (IEEE 802.15.4, IEEE 802.15.1, IEEE 802.15.11a, 11b, 11g, 11n, 11ac, 11ad, ISO/IEC 14513-3-10, IEEE 802.15.4g) is typically used.

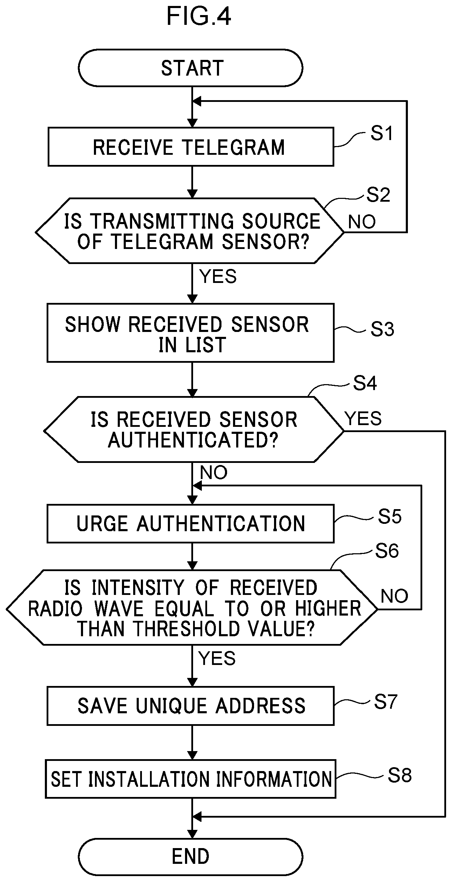

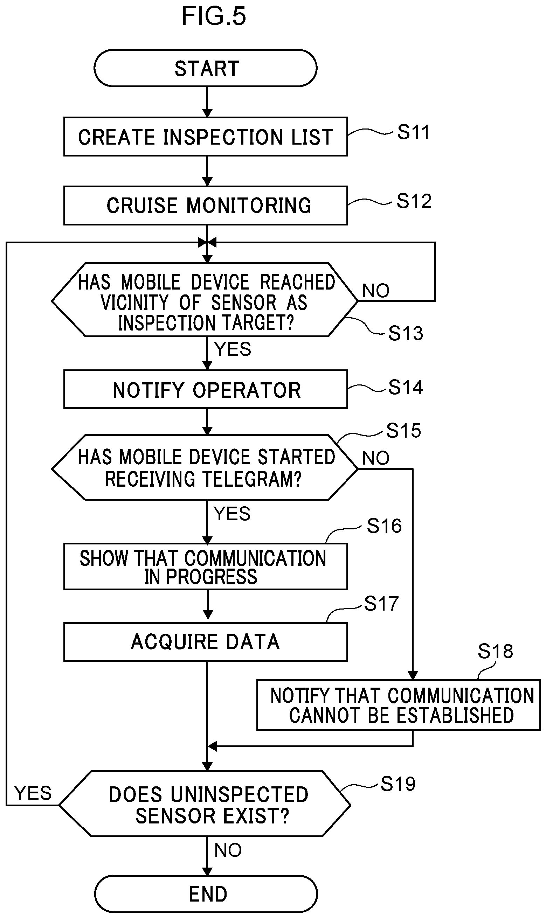

Next, with reference to FIGs. 4 and 5 a description will be made on operation of the detection system 1. FIG. 4 is a flowchart for explaining a procedure for performing the authentication registration of the unauthenticated sensor 10 that is newly installed in the detection system 1. FIG. 5 is a flowchart for explaining a procedure for collecting the state quantity that is detected by the authenticated and registered sensor 10. In the following description on the operation of the detection system 1, when the configuration of the detection system 1 is described, FIG. 1 to FIG. 3D can be appropriately referred. First, with reference to FIG. 4, a description will be made on a procedure for performing the authentication registration of the sensor 10 (authentication steps).

As described above, the target device 19 is provided with the plural sensors 10, so as to detect the various state quantities. When the detection system 1 is constructed, the sensor 10 without the installation information is attached to the target device 19, the target device 19 is installed in the management target area, and then the installation information is associated with the sensor 10. In this way, it is convenient because management of the construction is facilitated. In the case where the mobile device 20 and the sensor 10 communicate wirelessly, even if the two devices are separated from each other, the state quantity detected by the sensor 10 can be checked with the mobile device 20 and the sensor 10 can be set with the mobile device 20 as long as the radio wave from the sensor 10 can reach the mobile device 20. However, in the case where the sensor 10 has been installed in the target device 19 but the installation information of the sensor 10 has not been set, the following case possibly occurs. Even when it is attempted to detect a particular state quantity (for example, the current) of the certain target device 19 (for example, the target device 19A), the sensor 10 that detects the desired state quantity cannot be specified, and the unintended state quantity is acquired. There is also a possibility that an erroneous setting may be made to the unintended sensor 10. Furthermore, in the case where it is assumed that the radio wave can reach the wide range and the sensor 10 can be set by using any type of the mobile device 20 that can receive the radio wave emitted by the sensor 10, an unintended setting change may be made by an outsider. In order to avoid such inconvenience, in the detection system 1, the sensor 10 is set by the procedure as will be described below.

Regardless of whether being authenticated and registered (whether the installation information is registered), the sensor 10 that is attached to the target device 19 disposed in the management target area periodically transmits a telegram (a set of data that is written according to a certain format and is exchanged between the computers) (, or electronic message) including the unique address and the product-specific address. Here, there is a possibility that devices other than the sensor 10 also transmits the telegram including a certain type of information. The mobile device 20 is held by the operator and moves with the operator, and receives the telegram when it enters a range where the mobile device 20 can capture the radio wave emitted by some kind of object (S 1). Once receiving the telegram, the mobile device 20 analyzes the received telegram, and determines whether a transmitting source of the telegram is the sensor 10 (S2). Whether the transmitting source of the received telegram is the sensor 10 can be determined by acknowledging whether the product-specific address, which is included in the analyzed telegram, is an address indicating the sensor 10. If the transmitting source of the received telegram is not the sensor 10, the processing returns to the step of receiving the telegram (S 1) again. On the other hand, if the transmitting source of the received telegram is the sensor 10, the information currently possessed by the sensor 10 is shown in the list in the display part 22 of the mobile device 20 (S3). Here, an example of the list that is shown in the display part 22 is the list illustrated in FIG. 3A. In the example illustrated in FIG. 3A, in addition to the unique address of the sensor 10, the radio wave intensity measured by the radio wave intensity measurement unit 24, and the like are shown. The mobile device 20 cannot receive the state quantity, the installation information, and the like from the unauthenticated sensor 10.

The mobile device 20 checks whether the unique address of the sensor 10, which is included in the received and analyzed telegram and shown in the list, is included in the unique addresses stored in the authenticated sensor information storage unit 25, and thereby determines whether the sensor 10 has been authenticated (S4). If the unique address, which is included in the received and analyzed telegram, is not included in the unique addresses stored in the authenticated sensor information storage unit 25, the mobile device 20 determines that the sensor 10 has not been authenticated, and provides the display part 22 with display that urges authentication (S5). An example of the display that urges authentication is a message "AUTHENTICATE SENSOR. BRING SENSOR CLOSE TO DEVICE." as illustrated in FIG. 3B. In order to prevent the unauthorized registration from the outside (unintended authentication registration by the outsider), the detection system 1 is allowed to perform the authentication registration when the intensity of the radio wave, which is measured by the radio wave intensity measurement unit 24, is equal to or higher than the threshold value. As the threshold value herein, the radio wave with such intensity that the radio wave cannot be captured outside the management target area is typically set. Preferably, from a perspective of further prevent the unauthorized registration from the outside, the threshold value is set to such intensity that the radio wave can only be captured at point-blank range of the sensor 10 (typically, within a distance at the time of holding the mobile device 20 over the sensor 10). By setting the threshold value, just as described, the unauthorized registration by the outsider who cannot enter the management target area is prevented.

After the step (S5) of providing the display part 22 with the display that urges authentication, the mobile device 20 determines whether the radio wave intensity that is measured by the radio wave intensity measurement unit 24 is equal to or higher than the threshold value (S6). If the radio wave intensity is not equal to or higher than the threshold value, the step (S5) of providing the display that urges authentication is continued. On the other hand, if the radio wave intensity is equal to or higher than the threshold value, the mobile device 20 saves (stores) the unique address of the sensor 10 in the authenticated sensor information storage unit 25 (S7). By saving the unique address in the authenticated sensor information storage unit 25, the authentication registration of the sensor 10 is completed, and the sensor 10 becomes the authenticated sensor 10. The registration of the sensor 10 as the authenticated sensor 10 in the mobile device 20 enables the mobile device 20 that has performed the authentication registration of the sensor 10 to receive the telegram when the sensor 10 transmits the telegram including the detected state quantity. Here, in order to avoid erroneous authentication at the time when the mobile device 20 receives the radio wave with the sudden high intensity for any reason, "in the case where the intensity of the radio wave that is received in a predetermined time period is equal to or higher than the threshold value" and/or "in the case where the radio wave with the intensity that is equal to or higher than the threshold value is received for predetermined number of times", the unique address may be saved in the authenticated sensor information storage unit 25, and the sensor 10 may be authenticated and registered. In this embodiment, in the step (S7) of saving the unique address of the sensor 10 to be authenticated and registered in the authenticated sensor information storage unit 25, from a perspective of improving convenience at the time of later collecting the state quantity detected by the sensor 10, information on the location of the mobile device 20 at the time is also stored in the location information storage unit 28.

At this time point, the mobile device 20 has the unique address and the location information of the authenticated and registered sensor 10, but does not have the installation information of the sensor 10. For this reason, the installation information of the sensor 10 cannot be shown in the display part 22, and it is impossible to intuitively comprehend the type of the state quantity at the time when the data on the state quantity is later collected from the sensor 10. To address such a problem, in this embodiment, after the step (S7) of saving the unique address of the sensor 10 to be authenticated and registered in the authenticated sensor information storage unit 25, the installation information thereof is set (S8). In the step (S8) of setting the installation information, in this embodiment, as illustrated in FIG. 3C, the items to be registered of the installation information of the sensor 10, which are registered in the installation information storage unit 23 in advance, are shown in the pull-down menus in the display part 22. Accordingly, the installation information can easily be set by simply selecting the item from each of the pull-down menus. Once the installation information is set, as illustrated in FIG. 3D, a list, in which the installation information is added to the list illustrated in FIG. 3A, can be shown in the display part 22. In this embodiment, the installation information, which has been set in the mobile device 20, is sent to the sensor 10 by the wireless communication and is also stored in the installation information storage unit 13 of the sensor 10. Once the installation information is set (S8), the authentication registration of the sensor 10 is terminated. In this state, the mobile device 20 can receive, as the telegram, the state quantity detected by the authenticated and registered sensor 10. Here, if the sensor 10 has been authenticated in the step (S4) of determining whether the sensor 10 has been authenticated, the authentication registration of the sensor 10 is terminated. In this state, the mobile device 20 can receive, as the telegram, the state quantity detected by the authenticated and registered sensor 10.

Next, with reference to FIG. 5, a description will be made on the procedure for collecting the state quantity that is detected by the authenticated and registered sensor 10. The information on each of the sensors 10, which are authenticated and registered by the above-described flow illustrated in FIG. 4, is stored in the mobile device 20 and can be listed for display. The mobile device 20 can collect the data on the state-quantities, which are detected by the sensors 10 shown in the list. There is a case where the necessary timing to collect the detected state quantity differs by the sensor 10 shown in the list. For this reason, every time inspection is performed, the data acquisition specifying unit 29 can select the sensor 10, from which the state quantity is to be acquired. In this embodiment, when an item of performing the inspection is selected from the menu shown in the mobile device 20, as illustrated in FIG. 6A, a touch panel button, by touching which the sensor 10 can be added to an inspection list, is shown for each of the authenticated and registered sensors in the list. The operator of the mobile device 20 (typically, a person who performs the inspection) creates the inspection list in which the sensor(s) 10, acquisition of the state quantity from which is desired, are selected from the sensors 10 shown in the list (S11).

Once creating the inspection list, the operator starts cruising an inspection route (S12). By referring to the installation information of the sensors 10 that are added to the inspection list, a route of sequentially passing near the installation locations of such sensors 10 is preferably set as the inspection route. After cruising of the inspection route is started, the mobile device 20 determines whether the mobile device 20 has reached the vicinity of the sensor 10 as an inspection target (S13). The location information of the authenticated and registered sensor 10 is stored in the location information storage unit 28. Thus, when the mobile device 20 reaches the vicinity of the stored location, the location information storage unit 28 can detect that the mobile device 20 has reached the vicinity of the stored location. In the detection system 1, the mobile device 20 solely makes this determination on whether the mobile device 20 has reached the vicinity of the sensor 10 as the inspection target. Thus, such a determination is not affected by an actuation state of the sensor 10. As a criterion for determining that the mobile device 20 has reached the vicinity of the sensor 10 as the inspection target, typically, such a case can be adopted that the mobile device 20 has reached a location where the radio wave emitted from the sensor 10 can be received with the intensity that is equal to or higher than the threshold value. However, in the case where it is desired to notify existence of the sensor 10 in a wider range than the above, it may be determined that the mobile device 20 has reached the vicinity of the sensor 10 as the inspection target when the mobile device 20 reaches a location where the intensity of the radio wave emitted from the sensor 10 is lower than the threshold value but the radio wave with predetermined intensity (an appropriate value can be set according to a situation) can be captured. It should be noted that, in this embodiment, the mobile device 20 can receive the telegram including the state quantity from the sensor 10 only when the mobile device 20 reaches the location where the intensity of the radio wave emitted from the sensor 10 is equal to or higher than the threshold value.

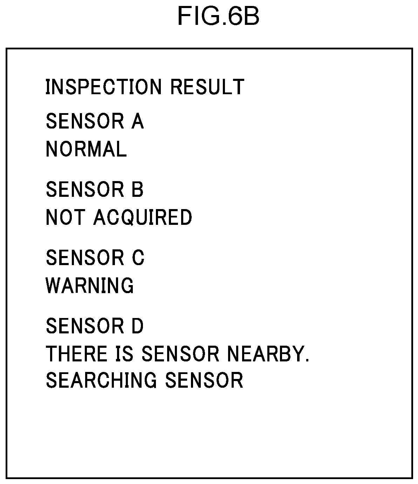

In the step (S13) of determining whether the mobile device 20 has reached the vicinity of the sensor 10 as the inspection target, if the mobile device 20 has not reached the vicinity of the sensor 10 as the inspection target, the processing returns to the same step (S13). On the other hand, if the mobile device 20 has reached the vicinity of the sensor 10 as the inspection target, the operator is notified of such a fact (S14). The notification to the operator is typically made by showing, in the display part 22, that the mobile device 20 has reached the vicinity of the sensor 10 as the inspection target. However, instead of such display, or in addition to such display, the sound may be output from the speaker 26, and/or the vibration may be generated by the vibration generator 27. The notification that the mobile device 20 has reached the vicinity of the sensor 10 as the inspection target can suppress the operator from forgetting to collect the state quantity from the sensor 10. An example of the notification in the display part 22 is posting of a message shown in an item of the "SENSOR D" in FIG. 6B. After the operator is notified (S14), the mobile device 20 determines whether the telegram including the state quantity starts being received from the target sensor 10 (S15). As described above, when the mobile device 20 reaches the location where the radio wave emitted from the sensor 10 can be received with the intensity that is equal to or higher than the threshold value, the mobile device 20 is brought into a state capable of receiving the telegram, which includes the state quantity, from the sensor 10. Although the mobile device 20 may start receiving the telegram, which includes the state quantity, from the sensor 10 when being brought into the state capable of receiving the telegram, before the mobile device 20 starts receiving the telegram, an encryption key exchange procedure between the mobile device 20 and the sensor 10 may be attempted and then reception of the telegram, which includes the state quantity, from the sensor 10 may be started after the encryption key exchange procedure succeeds. In this way security can be improved. Here, after the encryption key exchange procedure succeeds, the installation information stored in the installation information storage unit 13 of the sensor 10 may be checked against the installation information stored in the installation information storage unit 23 of the mobile device 20. Then, when these pieces of the installation information match each other, it may be confirmed that both of the installation information are associated with each other. Meanwhile, in the case where these pieces of the installation information do not match each other as a result of checking, it may be estimated that the installation information stored in the mobile device 20 was rewritten (changed), and it is assumed that the installation information set in the sensor 10 is correct. Then, the installation information stored in the mobile device 20 may be updated.

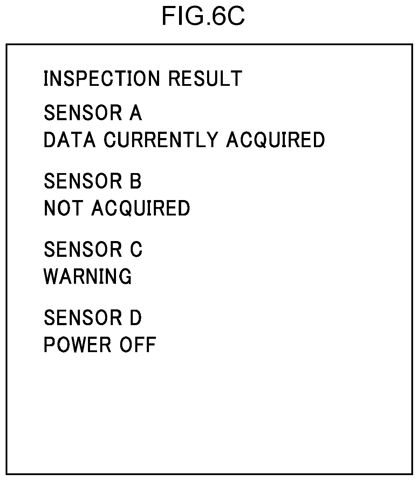

In the step (S15) of determining whether the reception of the telegram, which includes the state quantity, from the target sensor 10 is started, if the mobile device 20 starts receiving the telegram from the sensor 10, the mobile device 20 shows, in the display part 22, that the mobile device 20 is communicating with the sensor 10 (S16). An example of the display in the display part 22 herein is posting of a message shown in an item of the "SENSOR A" in FIG. 6C. By showing, in the display part 22, that the mobile device 20 is communicating with the sensor 10, the operator who holds the mobile device 20 can be suppressed from moving away from the location where the radio wave emitted from the sensor 10 can be received with the intensity that is equal to or higher than the threshold value. While the mobile device 20 acquires the data on the state quantity from the sensor 10, instead of providing the display part 22 with the display, or in addition to providing the display part 22 with the display, the melody may be output from the speaker 26, and/or the vibration may be generated by the vibration generator 27. When the reception of the telegram, which includes the state quantity, from the sensor 10 is completed, the mobile device 20 acquires the data on the state quantity detected by the sensor 10 (S17).

Going back a little, in the step (S 15) of determining whether the reception of the telegram, which includes the state quantity, from the target sensor 10 is started, in the case where the reception of the telegram from the target sensor 10 is not started, the mobile device 20 notifies the operator that the communication cannot be established via the display part 22 (S18). An example of a reason why the mobile device 20 cannot communicate with the sensor 10 is a case where the electric power is not supplied to the sensor 10. As the case where the electric power is not supplied to the sensor 10, a case of power failure and a case where the battery runs out even when the battery is provided are considered. The mobile device 20 notifies the operator that the communication cannot be established every time the mobile device 20 attempts the wireless communication with each of the sensors 10, allowing the operator to promptly acknowledge the sensor 10 that need to be addressed. In the step (S18) of notifying that the communication cannot be established, an example of the display in the display part 22 is posting of a message shown in the item of the "SENSOR D" in FIG. 6C. Instead of showing that the communication cannot be established in the display part 22, or in addition to showing that the communication cannot be established in the display part 22, the voice or the buzzer sound may be output from the speaker 26, and/or the vibration is generated by the vibration generator 27 to notify the operator. When the speaker 26 and/or the vibration generator 27 is used to notify the operator that the communication cannot be established, it is possible to avoid the operator from performing distracted inspection (inspection that is performed by the operator who is doing other thing). As described above, in addition to the display part 22, each of the speaker 26 and the vibration generator 27 constitutes a notification unit.

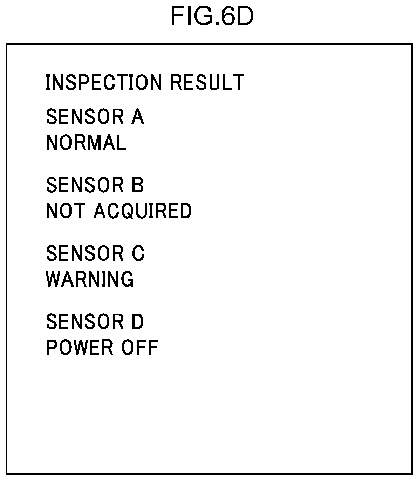

When informing that the communication cannot be established (S18), or when acquiring the data on the state quantity that is detected by the sensor 10 (S17), the mobile device 20 determines whether the uninspected sensor 10 exists among the sensors as the inspection target in the inspection list (S19). If the uninspected sensor 10 exists, the processing returns to the step (S13) of determining whether the mobile device 20 has reached the vicinity of the sensor 10 as the inspection target, and thereafter the above-described flow is repeated. On the other hand, if no uninspected sensor 10 exists, the inspection is terminated. For example, as illustrated in FIG. 6D, when the inspection is terminated, an inspection result is preferably shown in the display part 22.

As it has been described so far, in the detection system 1 according to this embodiment, the mobile device 20 can authenticate and register the sensor 10 when the mobile device 20 approaches the location where the telegram, which includes the unique address and sent from the unauthenticated sensor 10, can be received with the intensity equal to or higher than the threshold value. Therefore, the authentication registration can easily be performed while the unauthorized registration from the outside is avoided. In addition, the mobile device 20 automatically receives the telegram, which includes the state quantity detected by the sensor 10, when the mobile device 20 reaches the location where the intensity of the radio wave emitted from the sensor 10 in the inspection list, which is created in advance, is equal to or higher than the threshold value. Therefore, the data can easily be collected by simply cruising the inspection route.

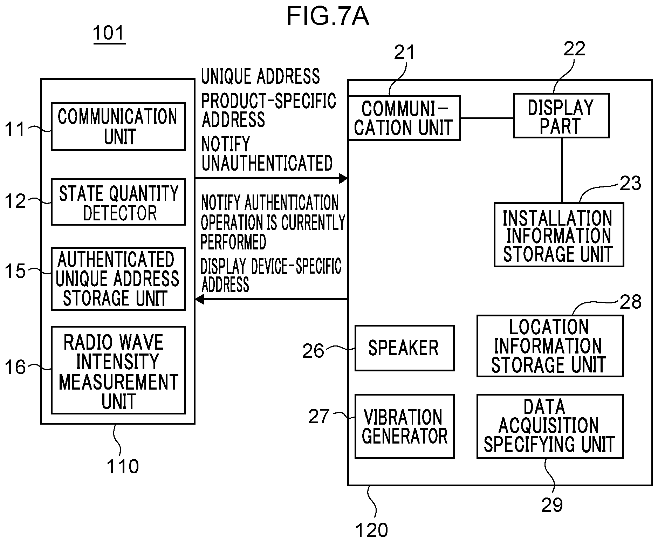

Next, with reference to FIG. 7A, a description will be made on a detection system 101 according to a modified example of the embodiment. FIG. 7A is a schematic configuration diagram of a sensor 110 and a mobile device 120 constituting the detection system 101 according to the modified example. In the detection system 101, the sensor 110 has an authenticated unique address storage unit 15 instead of the installation information storage unit 13 (see FIG. 2), and further has a radio wave intensity measurement unit 16 that is not provided in the sensor 10 (see FIG. 2). The authenticated unique address storage unit 15 is a portion capable of storing a unique address of the authenticated mobile device 120 in addition to having the function of the installation information storage unit 13 (see FIG. 2). Since the radio wave intensity measurement unit 16 is provided to the sensor 110, the mobile device 120 is not provided with the radio wave intensity measurement unit 24 (see FIG. 2). The mobile device 120 is not provided with the authenticated sensor information storage unit 25 (see FIG. 2), either. The configurations of the sensor 110 and the mobile device 120 other than the above are the same as those of the sensor 10 (see FIG. 2) and the mobile device 20 (see FIG. 2), respectively. In the thus-configured detection system 101, the sensor 110 receives, from the mobile device 120, a notification that the sensor 110 is currently under the authentication operation, and is shifted to an authentication operation mode. Then, the radio wave intensity measurement unit 16 of the sensor 110 measures the radio wave intensity of the wireless communication with the mobile device 120. In the case where the radio wave intensity is equal to or higher than the threshold value, the sensor 110 stores the unique address of the mobile device 120. In the case where the sensor 110 receives a radio communication from a mobile device other than the stored mobile device 120, the sensor 110 notifies the mobile device to be unauthorized if it is not authorized.

Next, with reference to FIG. 7B, a description will be made on a detection system 201 according to another modified example of the embodiment. FIG. 7B is a schematic configuration diagram of a sensor 210 and the mobile device 20 constituting the detection system 201 according to the other modified example. In the detection system 201, the sensor 210 has a radio wave intensity varying unit 18 in addition to the units of the sensor 10 (see FIG. 2). The radio wave intensity varying unit 18 can vary a reaching distance of the radio wave by varying the intensity and/or a frequency of the radio wave of the telegram, which includes the unique address and is emitted from the sensor 210. A configuration of the sensor 210 other than the above is the same as that of the sensor 10 (see FIG. 2). The mobile device 20 that is provided in the detection system 201 is the same as the mobile device 20 that is provided in the detection system 1 (see FIG. 2). In the thus-configured detection system 201, the intensity of the radio wave emitted from the sensor 210 is minimized (communicable only within a short distance) prior to the authentication registration of the sensor 210. Then, after the authentication registration is performed and storing of the installation information is completed, the intensity of the emitted radio wave is increased. By changing the radio wave intensity, just as described, the mobile device 20 that can be authenticated is limited to one existing within the short distance by the sensor 210 emitting the radio wave with the relatively low intensity until the authentication registration is performed. Then, after the authentication registration is performed, the sensor 210 emits the radio wave with the high intensity. In this way, the mobile device 20 can receive the state quantity, which is detected by the sensor 210, in the relatively long distance.

In the description that has been made so far, the installation information storage unit 13 stores the product-specific address and the installation information in addition to the unique address. However, the installation information storage unit 13 only needs to store at least the unique address, and can be configured to store the information other than the unique address when necessary.

In the description that has been made so far, the mobile device 20 functions as both of the setting device and the data collection device. However, when one of the functions suffices, the mobile device 20 does not have to have the other function.

In the description that has been made so far, the mobile device 20 has the speaker 26 and the vibration generator 27. However, in the case where the notification by outputting the voice and/or the vibration is unnecessary, the speaker 26 and/or the vibration generator 27 may not be provided.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A sensor authentication registration system, comprising:
a plurality of sensors installed in one or more sensing target devices disposed in a management target area, each of the plurality of sensors being configured to detect a state quantity of the one or more sensing target devices; and
a setting device configured to store installation information for each of the plurality of sensors, wherein:
each of the sensors and the setting device are configured to be wirelessly communicable with each other,
a radio wave intensity measurement unit is provided to at least one of the plurality of sensors or the setting device, the radio wave intensity measurement unit being configured to measure an intensity of a radio wave in wireless communication, and
the setting device is configured to perform an authentication operation to store the installation information in a case in which, when the presence of a sensor whose installation information is not stored is detected, the intensity of the radio wave measured by the radio wave intensity measurement unit is equal to or higher than a threshold value.

2. The sensor authentication registration system according to claim 1, wherein the setting device comprises a display part configured to show information on the sensor.

3. The sensor authentication registration system according to claim 2, wherein, during the authentication operation, the setting device is configured to show, in the display part, an item of the installation information of the sensor of which the installation information is to be stored.

4. The sensor authentication registration system according to any one of claim 1 to claim 3, wherein the sensors are configured to receive and store the installation information, which is stored in the setting device, from the setting device via the wireless communication, and are configured to increase the intensity of the radio wave emitted from the sensor after storing of the installation information is completed.

5. A data collection system, comprising:
a plurality of sensors installed in one or more sensing target devices disposed in a management target area, each of the plurality of sensors being configured to detect a state quantity of the one or more sensing target devices; and
a data collection device that stores installation information for each of the plurality of sensors, the data collection device being configured to receive the state quantity detected by the sensor of which the installation information is stored, via wireless communication,
wherein the data collection device is configured to automatically receive the state quantity detected by the sensor when the data collection device approaches to within a range within which the wireless communication can be received for each of the sensors for which the installation information is stored.

6. The data collection system according to claim 5, wherein the data collection device comprises a location information storage unit configured to store information regarding a receivable location, being a location at which a radio wave from the sensor in the wireless communication can be received, with an intensity that is equal to or higher than a threshold value, and the data collection device is configured to automatically receive the state quantity detected by the sensor when the data collection device is in the receivable location.

7. The data collection system according to claim 6, wherein the data collection device comprises a notification unit configured to notify an operator of the data collection device that the wireless communication with the sensor is not established when the wireless communication with the sensor is not established even when the data collection device is in the receivable location.

8. The data collection system according to any one of claim 5 to claim 7, wherein the data collection device comprises a data acquisition specifying unit configured to select the sensor, from which data is to be collected, from the plurality of sensors, the installation information of each of which is stored.

9. A data collection method comprising:
an authentication step of individually associating a plurality of sensors with a data collection device, wherein the sensors are installed in one or more sensing target devices disposed in a management target area and are configured to detect a state quantity of the sensing target devices, and wherein the data collection device is configured to collect data on the state quantity detected by the sensor; and
a reception step of automatically receiving, by the data collection device, the state quantity detected by the sensor when the data collection device approaches to within a range within which the data collection device can receive the state quantity detected by the sensor, which is associated with the data collection device, via wireless communication.
